# EUROPÄISCHE PATENTSCHRIFT

(11) **EP 3 947 098 B1**
(45) Veröffentlichungstag und Bekanntmachung des Hinweises auf die Patenterteilung: **19.04.2023**
(21) Anmeldenummer: 19823767.9
(22) Anmeldetag: 09.12.2019
(51) Int. Cl.: B61D 43/00, B61F 15/20

(54) **RADSATZLAGER FÜR EIN SCHIENENFAHRZEUG UND VERFAHREN ZUM BETRIEB EINER SENSORIK EINES RADSATZLAGERS**
WHEELSET BEARING FOR A RAIL VEHICLE AND METHOD FOR OPERATING A SENSOR SYSTEM OF A WHEELSET BEARING
BOÎTE D'ESSIEU POUR UN VÉHICULE FERROVIAIRE ET PROCÉDÉ DE FONCTIONNEMENT D'UN CAPTEUR D'UNE BOÎTE D'ESSIEU

(30) Priorität: 05.04.2019 DE 102019108981
(43) Veröffentlichungstag der Anmeldung: 09.02.2022
(73) Patentinhaber: Schaeffler Technologies AG & Co. KG, 91074 Herzogenaurach (DE)
(72) Erfinder: PACHNER, Sebastian, 97209 Veitshöchheim (DE); ROSENHEINRICH, Bert, 97456 Dittelbrunn (DE); HOLZAPFEL, Michael, 89522 Heidenheim (DE)
(86) Internationale Anmeldenummer: PCT/DE2019/101057
(87) Internationale Veröffentlichungsnummer: WO 2020/200340

(56) Entgegenhaltungen:
- AT-A1- 507 382
- DE-A1-102006 035 703
- DE-A1-102010 021 160
- DE-A1-102014 207 209
- JP-A- 2004 132 447
- US-A1- 2014 079 350
- US-A1- 2016 126 806

## Beschreibung

Die Erfindung betrifft ein für den Betrieb in einem Schienenfahrzeug vorgesehenes Radsatzlager, welches einen Generator und eine mit Hilfe des Generators betriebene Sensorik umfasst. Weiter betrifft die Erfindung ein Verfahren zum Betrieb einer Sensorik eines Radsatzlagers eines Schienenfahrzeugs.

Die US 2016/126806 A1 offenbart ein Radsatzlager für ein Schienenfahrzeug, mit einem als Klauenpolgenerator ausgebildeten Generator, welcher mindestens einen nicht rotierenden Klauenring umfasst, sowie mit einer vom Generator mit elektrischer Energie versorgten Sensorik ausgestattet ist, welche mehrere Sensorikmodule umfasst.

Aus der AT 507 382 A1 ist ein Radsatzlagergehäuse mit Positionserfassungseinrichtung für ein Schienenfahrzeug bekannt. Zur Stromversorgung der Positionserfassungseinrichtung ist ein Generator vorgesehen, welcher einen Rotor aufweist, der von einer im Radsatzlagergehäuse drehbar gelagerten Radsatzwelle antreibbar ist. Der zugehörige Stator des Generators ist an der Innenseite eines Deckels des Radsatzlagergehäuses montiert. Insgesamt ist der elektrische Generator als lagerloser Nabengenerator ausgebildet.

Die DE 10 2006 035 703 A1 offenbart eine Vorrichtung zur Überwachung mindestens einer Betriebsgröße eines Radsatzlagers eines Schienenfahrzeugs. In diesem Fall umfasst ein elektrischer Generator ein Wiegandelement als mit einer Welle mitrotierendes Generatorelement.

Der Erfindung liegt die Aufgabe zugrunde, gegenüber dem genannten Stand der Technik weiterentwickelte Möglichkeiten, Sensorik in einem Radsatzlager eines Schienenfahrzeugs anzubringen und zu betreiben, anzugeben.

Diese Aufgabe wird erfindungsgemäß gelöst durch ein für die Verwendung in einem Schienenfahrzeug ausgebildetes Radsatzlager mit den Merkmalen des Anspruchs 1. Ebenso wird die Aufgabe gelöst durch ein Verfahren zum Betrieb einer Sensorik eines Radsatzlagers gemäß Anspruch 10. Im Folgenden im Zusammenhang mit dem Betriebsverfahren erläuterte Ausgestaltungen und Vorteile der Erfindung gelten sinngemäß auch für die Vorrichtung, das heißt das Radsatzlager, und umgekehrt.

Das Radsatzlager umfasst einen als Klauenpolgenerator ausgebildeten Generator, welcher einen nicht rotierenden Klauenring aufweist, sowie eine vom Klauenpolgenerator mit elektrischer Energie versorgte Sensorik, welche mehrere Sensorikmodule umfasst, die zumindest zum Teil auf einem auf den Klauenring aufgesetzten Sensorträger befestigt und an eine gemeinsame Datenleitung angeschlossen sind.

Verschiedene Klauenpolgeneratoren sind prinzipiell zum Beispiel aus den Dokumenten DE 10 2010 021 160A1 und EP 2 572 114 B1 bekannt. In diesen Fällen sind in eine Wälzlagerung jeweils zwei Klauenpolgeneratoren integriert.

Ein weiteres Wälzlager mit integriertem Klauenpolgenerator ist in der DE 10 2014 207 209 A1 beschrieben, wobei in diesem Fall magnetisch leitende Klauen entlang des Umfangs eines Lagerrings des Wälzlagers nur abschnittsweise angeordnet sind.

Im Fall des erfindungsgemäßen Radsatzlagers deckt der Sensorträger den ringscheibenförmigen Klauenring entweder vollständig oder nur zum Teil ab. In jedem Fall ist durch die Anbringung des Sensorträgers auf dem Klauenring eine raumsparende Anordnung der Sensorikmodule innerhalb des Radsatzlagers möglich. Der Klauenpolgenerator kann entweder einen einzigen Klauenring oder eine Mehrzahl an Klauenringen, insbesondere zwei Klauenringe, umfassen, wobei sich im letztgenannten Fall beide Klauenringe vorzugsweise auf derselben Stirnseite der Wälzlagerung des Radsatzlagers befinden.

Der Sensorträger ist entweder direkt am Klauenring befestigt oder an einem sonstigen nicht rotierenden Teil des Radsatzlagers fixiert. Auch kann der Klauenring selbst als Sensorträger genutzt werden. In jedem Fall liegt der Sensorträger in einer Ebene, welche parallel zur Ebene, in der der Klauenring liegt, angeordnet ist. In Radialrichtung ragt der Sensorträger in bevorzugter Ausgestaltung weder nach innen noch nach außen über den Klauenring hinaus. In Umfangsrichtung des Klauenrings erstreckt sich der Sensorträger vorzugsweise über einen Bogen von nicht mehr als 180 Grad, insbesondere maximal über einen Winkel von 90 Grad.

Die Sensorikmodule, welche auf dem Sensorträger angeordnet sind, werden je nach den Anforderungen des Einzelfalls ausgewählt und sind auf einfache Weise austauschbar, wobei die gemeinsame Datenleitung, an die die Sensorikmodule anzuschließen sind, maßgeblich zum fertigungsfreundlichen, vielfältig konfigurierbaren Aufbau der Sensorik beiträgt. In besonders bevorzugter Ausgestaltung dient die gemeinsame Datenleitung zugleich der Energieversorgung der Sensorikmodule, zumindest soweit diese auf dem Sensorträger angeordnet sind.

Das Verfahren zum Betrieb der Sensorik des Radsatzlagers zeichnet sich damit allgemein dadurch aus, dass elektrische Energie mittels eines Klauenpolgenerators, der einen nicht rotierenden Klauenring umfasst, erzeugt und zum Betrieb einer zumindest teilweise auf dem Klauenpolgenerator innerhalb eines ringförmigen Raums angeordneten, mehrere Sensorikmodule umfassenden Sensorik verwendet wird, wobei von den Sensorikmodulen gelieferte Daten über eine Leitung, welche zugleich als Energieversorgungsleitung dient, übertragen werden.

Die auf dem Sensorträger angeordneten Sensorikmodule sind beispielsweise zur Ortsauflösung, Temperaturmessung, Beschleunigungsmessung und/oder zur Detektion der Anwesenheit und gegebenenfalls der Eigenschaften von Schmierstoff ausgebildet. Was ortsauflösende Sensorikmodule betrifft, können diese prinzipiell als inkrementelle oder als absolute Sensoren gestaltet sein. Ein ortsauflösender Sensor kann in ein Odometriesystem, das ein System zur Schätzung der Position anhand eines Vortriebsystems, eingebunden sein. Derselbe ortsauflösende Sensor oder ein gesonderter Sensor kann als Drehzahlsensor verwendet werden.

Beispiele von Beschleunigungssensoren in verschiedenen Anwendungen sind in den Dokumenten DE 10 2017 121 010 A1 und DE 10 2017 112 029 B3 beschrieben. Was Schmierstoffsensoren betrifft, wird zum technischen Hintergrund auf die Dokumente DE 10 2013 211 486 A1 und DE 10 2010 015 722 A1 hingewiesen.

Räumlich vom Sensorträger, der auf dem Klauenring positioniert ist, getrennt sind gemäß möglicher Weiterbildungen ein Einfederungssensor und/oder ein Kraftsensor in die Sensorik des Radsatzlagers eingebunden. Der Kraftsensor liegt beispielsweise in Form eines Dehnungsmessstreifens vor, welcher am Außenring eines relativ zum Klauenring ortsfesten Wälzlagerrings des Radsatzlagers angeordnet ist.

In allen Fällen ist durch den in das Radsatzlager integrierten Klauenpolgenerator eine unterbrechungsfreie Stromversorgung der Sensorik gegeben, die elektrische Energie liefert, sobald sich das Schienenfahrzeug bewegt. Optional ist der Klauenpolgenerator mit einem Energiespeicher, zum Beispiel in Form eines Akkumulators und/oder Kondensators, gekoppelt, um auch bei stillstehendem Schienenfahrzeug die Energieversorgung der Sensorik über eine begrenzte Zeit aufrechtzuerhalten. Die vom Klauenpolgenerator gelieferte Energie ist auch für eine drahtlose Übertragung von Daten, die mittels der Sensoren erfasst wurden, nutzbar.

Nachfolgend wird ein Ausführungsbeispiel der Erfindung anhand einer Zeichnung näher erläutert. Hierin zeigen:

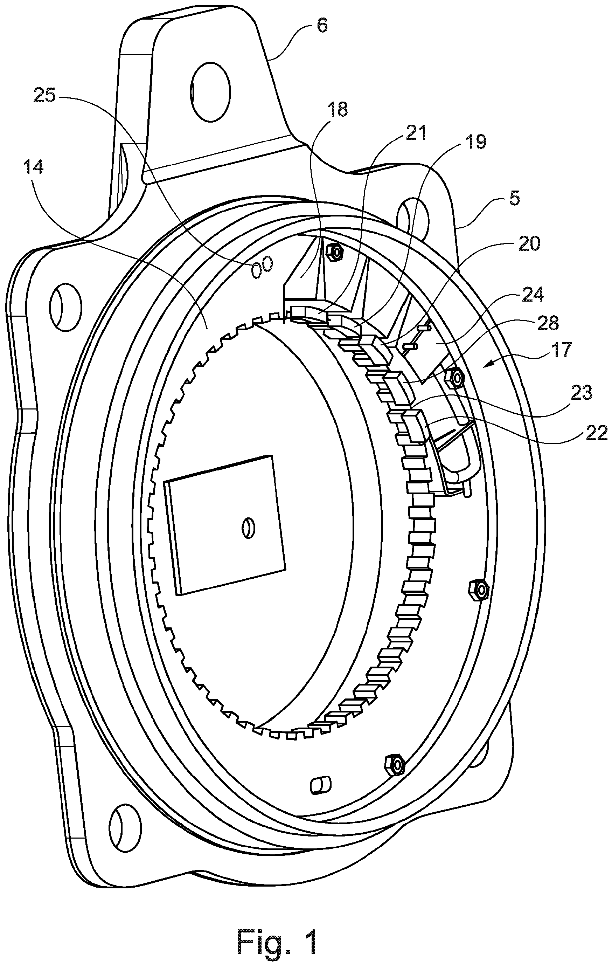

- Fig. 1: in perspektivischer Ansicht einen Gehäusedeckel eines Radsatzlagers einschließlich verschiedener Sensorikkomponenten,

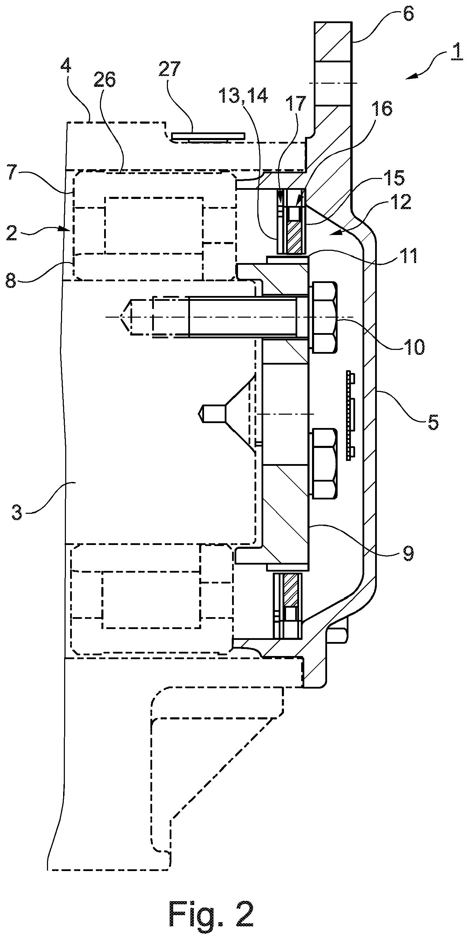

- Fig. 2: das Radsatzlager einschließlich des Gehäusedeckels in einer Schnittdarstellung.

Ein insgesamt mit dem Bezugszeichen 1 gekennzeichnetes Radsatzlager ist zur Verwendung in einem Schienenfahrzeug vorgesehen und umfasst ein Wälzlager 2, nämlich Rollenlager, mit welchem eine Radsatzwelle 3 in einem Gehäuse 4 des Radsatzlagers 1 gelagert ist. Das Gehäuse 4 ist durch einen Gehäusedeckel 5 verschlossen. Eine Befestigungslasche des Gehäusedeckels 5 ist mit 6 bezeichnet. In dem Gehäuse 4 ist der mit 7 bezeichnete Außenring des Wälzlagers 2 aufgenommen. Bei dem mit 8 bezeichneten, auf der Radsatzwelle 3 gehaltenen Innenring des Wälzlagers 2 handelt es sich um den rotieren Lagerring des Wälzlagers 2. Der Innenring 8 kontaktiert eine Endkappe 9, welche mit Hilfe von Schrauben 10 stirnseitig auf der Radsatzwelle 3 befestigt ist. Auf der Endkappe 9 befindet sich ein Magnetband 11, welches einem Klauenpolgenerator 12 zuzurechnen ist.

Das beim Betrieb des Radsatzlagers 1 rotierende Magnetband 11, an dessen Umfang sich Magnetpole mit abwechselnder Polarität befinden, wirkt zusammen mit einem im Gehäuse 4 befestigten Stator 13 des Klauenpolgenerators 12. Der Stator 13 umfasst einen Spulenkörper aus glasfaserverstärktem Kunststoff sowie zwei zueinander parallele Klauenringe 14, 15, zwischen welchen sich eine Spulenwicklung 16 aus Kupfer befindet. Bei den Klauenringen handelt es sich um tiefgezogene und gestanzte Blechteile. Der Klauenring 14 trägt eine Sensorik 17, auf die im Folgenden näher eingegangen wird. Die Klauenringe 14, 15 werden auch als Klauenbleche bezeichnet.

Direkt auf den Klauenring 14 ist ein Sensorträger 18 aufgesetzt, welcher sich bogenförmig über einen Teil des Umfangs des Klauenrings 14 erstreckt. Auf dem Sensorträger 18 sind unter anderem ein Odometriesensor 19 und ein Drehzahlsensor 20 als ortsauflösende Sensorikmodule 19, 20 befestigt. Als weitere Sensorikmodule sind ein Temperatursensor 21, ein Beschleunigungssensor 22 und ein Schmierstoffsensor 28 auf dem Sensorträger 18 gehalten. Die Sensorikmodule 19, 20, 21, 22, 28 sind an eine gemeinsame Leitung 23 angeschlossen. Ein zugehöriger Pegelwandler ist mit 24 bezeichnet. Die Leitung 23 ist dazu ausgebildet, sowohl Daten zur übertragen, als auch die gesamte Sensorik 17 über den Klauenpolgenerator 12 mit Energie zu versorgen. Kabeldurchführungen für die Sensorik 17 im Klauenring 14 sind mit 25 bezeichnet.

Zusätzlich zu den auf dem Sensorträger 18 befestigten Sensorikmodulen 19, 20, 21, 22, 28 umfasst die Sensorik 17 zwei vom Sensorträger 18 beabstandete Sensoren 26, 27, nämlich einen Einfederungssensor 26 und einen Kraftsensor 27. Der Einfederungssensor 26 befindet sich am Außenring 7 des Wälzlagers 2. Beim Kraftsensor 27 handelt es sich um einen außen am Gehäuse 4 angebrachten Dehnungsmessstreifen. Auch die Sensoren 26, 27 sind über die Leitung 23 oder gesonderte Leitungen datentechnisch mit denjenigen Sensorikmodulen 19, 20, 21, 22, 28, die sich auf dem Sensorträger 18 befinden, verknüpft. Der Sensorträger 18 stellt als mit dem Klauenring 14 verbundene Platine einen integrierten Bestandteil des Klauenpolgenerators 12 dar.

### Bezugszeichenliste

1 Radsatzlager
2 Wälzlager
3 Radsatzwelle
4 Gehäuse
5 Gehäusedeckel
6 Befestigungslasche
7 Außenring
8 Innenring
9 Endkappe
10 Schraube
11 Magnetband
12 Klauenpolgenerator
13 Stator
14 Klauenring
15 Klauenring
16 Spulenwicklung
17 Sensorik
18 Sensorträger
19 Odometriesensor
20 Drehzahlsensor
21 Temperatursensor
22 Beschleunigungssensor
23 Leitung
24 Pegelwandler
25 Kabeldurchführung
26 Einfederungssensor
27 Kraftsensor
28 Schmierstoffsensor

## Patentansprüche

1. Radsatzlager (1) für ein Schienenfahrzeug, mit einem als Klauenpolgenerator (12) ausgebildeten Generator, welcher mindestens einen nicht rotierenden Klauenring (14, 15) umfasst, sowie mit einer vom Generator (12) mit elektrischer Energie versorgten Sensorik (17), welche mehrere Sensorikmodule (19, 20, 21, 22) umfasst,
**dadurch gekennzeichnet, dass** die Sensorikmodule (19, 20, 21, 22) zumindest zum Teil auf einem auf den Klauenring (14, 15) aufgesetzten Sensorträger (18) befestigt und an eine gemeinsame Datenleitung (23) angeschlossen sind.

2. Radsatzlager (1) nach Anspruch 1, **dadurch gekennzeichnet, dass** die Sensorik (17) mindestens ein ortsauflösendes Sensorikmodul (19, 20) umfasst.

3. Radsatzlager (1) nach Anspruch 2, **dadurch gekennzeichnet, dass** das ortsauflösende Sensorikmodul (19) Teil eines Odometriesystems ist.

4. Radsatzlager (1) nach Anspruch 2 oder 3, **dadurch gekennzeichnet, dass** die ortsauflösende Sensorik einen Drehzahlsensor (20) umfasst.

5. Radsatzlager (1) nach einem der Ansprüche 1 bis 4, **dadurch gekennzeichnet, dass** ein Temperatursensor (21) als auf dem Sensorträger (18) befestigtes Sensormodul vorgesehen ist.

6. Radsatzlager (1) nach einem der Ansprüche 1 bis 5, **dadurch gekennzeichnet, dass** ein Beschleunigungssensor (22) als auf dem Sensorträger (18) befestigtes Sensormodul vorgesehen ist.

7. Radsatzlager (1) nach einem der Ansprüche 1 bis 6, **dadurch gekennzeichnet, dass** ein Schmierstoffsensor (28) als auf dem Sensorträger (18) befestigtes Sensormodul vorgesehen ist.

8. Radsatzlager (1) nach einem der Ansprüche 1 bis 7, **dadurch gekennzeichnet, dass** die Sensorik (17) einen vom Sensorträger (18) beabstandeten Einfederungssensor (26) umfasst.

9. Radsatzlager (1) nach einem der Ansprüche 1 bis 8, **dadurch gekennzeichnet, dass** die Sensorik (17) einen vom Sensorträger (18) beabstandeten Kraftsensor (27) in Form eines Dehnungsmessstreifens, welcher am Außenring (7) eines relativ zum Klauenring (14, 15) ortsfesten Wälzlagerrings (2) angeordnet ist, umfasst.

10. Verfahren zum Betrieb einer Sensorik (17) eines Radsatzlagers (1) eines Schienenfahrzeugs, **dadurch gekennzeichnet, dass** elektrische Energie mittels eines Klauenpolgenerators (12), der einen nicht rotierenden Klauenring (14, 15) umfasst, erzeugt und zum Betrieb einer zumindest teilweise auf dem Klauenpolgenerator (14, 15) innerhalb eines ringförmigen Raums angeordneten, mehrere Sensorikmodule (19, 20, 21, 22, 26, 27, 28) umfassenden Sensorik (17) verwendet wird, und wobei von den Sensorikmodulen (19, 20, 21, 22, 26, 27, 28) gelieferte Daten über eine gemeinsame Leitung (23), welche zugleich als Energieversorgungsleitung dient, übertragen werden.

## Claims

1. A wheelset bearing (1) for a rail vehicle, with a generator designed as a claw pole generator (12), which comprises at least one non-rotating claw ring (14, 15), and with a sensor system (17) supplied with electrical energy by the generator (12), which comprises a plurality of sensor system modules (19, 20, 21, 22),
**characterized in that** the sensor system modules (19, 20, 21, 22) are mounted at least in part on a sensor carrier (18) which is placed on the claw ring (14, 15) and are connected to a shared data line (23).

2. The wheelset bearing (1) according to Claim 1, **characterized in that** the sensor system (17) comprises at least one spatially-resolving sensor system module (19, 20).

3. The wheelset bearing (1) according to Claim 2, **characterized in that** the spatially-resolving sensor system module (19) is a part of an odometry system.

4. The wheelset bearing (1) according to Claim 2 or 3, **characterized in that** the spatially-resolving sensor system comprises a rotation speed sensor (20).

5. The wheelset bearing (1) according to one of Claims 1 to 4, **characterized in that** a temperature sensor (21) is provided as a sensor module mounted on the sensor carrier (18).

6. The wheelset bearing (1) according to one of Claims 1 to 5, **characterized in that** an acceleration sensor (22) is provided as a sensor module mounted on the sensor carrier (18).

7. The wheelset bearing (1) according to one of Claims 1 to 6, **characterized in that** a lubricant sensor (28) is provided as a sensor module mounted on the sensor carrier (18).

8. The wheelset bearing (1) according to one of Claims 1 to 7, **characterized in that** the sensor system (17) comprises a deflection sensor (26) arranged at a distance from the sensor carrier (18).

9. The wheelset bearing (1) according to one of Claims 1 to 8, **characterized in that** the sensor system (17) comprises a force sensor (27) at a distance from the sensor carrier (18) in the form of a strain gauge, which is arranged on the outer ring (7) of a rolling bearing ring (2) which is in a fixed position relative to the claw ring (14, 15).

10. A method for operating a sensor system (17) of a wheelset bearing (1) of a rail vehicle, **characterized in that** electrical energy is generated by means of a claw pole generator (12), which comprises a non-rotating claw ring (14, 15), and which is used to operate a sensor system (17) arranged at least in part on a claw pole generator (14, 15) inside an annular space and comprising a plurality of sensor system modules (19, 20, 21, 22, 26, 27, 28), and wherein data delivered by the sensor system modules (19, 20, 21, 22, 26, 27, 28) is transferred via a shared line (23) which simultaneously serves as an energy supply line.

## Revendications

1. Boîte d'essieu (1) pour un véhicule ferroviaire, avec un générateur réalisé sous la forme d'un générateur à pôles à griffes (12) et comprenant au moins une bague à griffes (14, 15) non rotative et avec un capteur (17) alimenté en énergie électrique par le générateur (12), qui comprend une pluralité de modules de capteur (19, 20, 21, 22),
**caractérisée en ce que** les modules de capteur (19, 20, 21, 22) sont fixés au moins partiellement à un support de capteur (18) placé sur la bague à griffes (14, 15) et sont connectés à une ligne de données commune (23).

2. Boîte d'essieu (1) selon la revendication 1, **caractérisée en ce que** le capteur (17) comprend au moins un module de capteur (19, 20) à résolution spatiale.

3. Boîte d'essieu (1) selon la revendication 2, **caractérisée en ce que** le module de capteur (19) à résolution spatiale fait partie d'un système odométrique.

4. Boîte d'essieu (1) selon la revendication 2 ou 3, **caractérisée en ce que** le capteur à résolution spatiale comprend un capteur de vitesse de rotation (20).

5. Boîte d'essieu (1) selon l'une quelconque des revendications 1 à 4, **caractérisée en ce qu'**un capteur de température (21) est prévu sous la forme d'un module de capteur fixé au support de capteur (18).

6. Boîte d'essieu (1) selon l'une quelconque des revendications 1 à 5, **caractérisée en ce qu'**un capteur d'accélération (22) est prévu sous la forme d'un module de capteur fixé au support de capteur (18).

7. Boîte d'essieu (1) selon l'une quelconque des revendications 1 à 6, **caractérisée en ce qu'**un capteur de lubrifiant (28) est prévu sous la forme d'un module de capteur fixé au support de capteur (18).

8. Boîte d'essieu (1) selon l'une quelconque des revendications 1 à 7, **caractérisée en ce que** le capteur (17) comprend un capteur de compression de ressort (26) espacé du support de capteur (18).

9. Boîte d'essieu (1) selon l'une quelconque des revendications 1 à 8, **caractérisée en ce que** le capteur (17) comprend un capteur de force (27), sous la forme d'une jauge de contrainte, espacé du support de capteur (18), qui est disposé sur la bague extérieure (7) d'une bague de roulement (2) fixe par rapport à la bague à griffes (14, 15).

10. Procédé de fonctionnement d'un capteur (17) d'une boîte d'essieu (1) d'un véhicule ferroviaire, **caractérisé en ce que** de l'énergie électrique est générée au moyen d'un générateur à pôles à griffes (12) qui comprend une bague à griffes (14, 15) non rotative et est utilisée pour faire fonctionner un capteur (17) au moins partiellement disposé sur le générateur à pôles à griffes (14, 15) à l'intérieur d'un espace annulaire et comprenant plusieurs modules de capteur (19, 20, 21, 22, 26, 27, 28) et les données fournies par les modules de capteur (19, 20, 21, 22, 26, 27, 28) étant transmises par l'intermédiaire d'une ligne commune (23) servant en même temps de ligne d'alimentation en énergie.
